# EUROPEAN PATENT APPLICATION

(11) **EP 1 413 426 A1**
(43) Date of publication of application: **28.04.2004**
(21) Application number: 03023927.1
(22) Date of filing: 21.10.2003
(51) Int. Cl.: B32B 7/04, B32B 9/02, B29C 44/56, B62D 1/04

(54) **Wrapped steering wheel free of adhesive interface**

(30) Priority: 22.10.2002 US 277784
(71) Applicant: TRW VEHICLE SAFETY SYSTEMS, INC., Washington, Michigan 48094 (US)
(72) Inventor: Anaya, Gabriel, Shelby Township Michigan 48316 (US); Grilli, David A., Troy Michigan 48083 (US)
(74) Representative: Wagner, Karl H., Dipl.-Ing.

(57) **Abstract**

A padding element (10) for an interior component of a motor vehicle has a molded substrate (12) and a skin (14). The molded substrate (12) defines an external surface (16) having an inherent tackiness sufficient to adhere the skin (14) to the molded substrate (12).

## Description

### Field of the Invention

The present invention relates to a padding element for an interior component of a motor vehicle and particularly to a padding element for a steering wheel.

### Background of the Invention

Interior components of motor vehicles, such as a steering wheel for an automobile, are often covered with a padding element. The padding element is typically formed from a plastic material. Examples of well known plastic materials that can be used to form the padding element are polyurethane foam, soft polyvinyl chloride, expanded polyvinyl chloride, and expanded polypropylene.

U.S. Patent No. 6,164,691 discloses a steering wheel covered with a thermoplastic foam material. The thermoplastic foam material has a continuous external surface molded from a single thermoplastic material. A preferred thermoplastic foam material is formed from Arnitel EM 400, which is commercially available from DSM Engineering Plastics. Arnitel EM 400 is a polyester elastomer that has a Shore D hardness of 38.

WO 97/12930 teaches a padding material for a steering wheel. The padding material is formed by injection molding a mixture of a thermoplastic material or thermoplastic elastomer material and a plurality of microspheres. The microspheres comprise plastic shells filled with gas or liquefied gas.

U.S. Patent No. 6,216,556 discloses a method of manufacturing a steering wheel. The method includes providing a steering wheel core with a ring portion and a spoke portion and coating the ring portion and spoke portion with a coating layer. The coating layer is made from a synthetic resin having a hardness (JIS A) of 40 to 90.

### Summary of the Invention

The present invention relates to a padding element for an interior component of a motor vehicle. The padding element comprises a molded substrate and a skin. The molded substrate defines an external surface having an inherent tackiness sufficient to adhere the skin to the molded substrate.

Another aspect of the present invention relates to a method of forming a padding element for an interior component of a motor vehicle. In the method, a molded substrate and a skin are provided. The molded substrate includes an external surface having an inherent tackiness sufficient to adhere the skin to the molded substrate. The skin is attached to the molded substrate.

A further aspect of the present invention relates to a steering wheel. The steering wheel comprises a rim portion, a spoke portion, and a padding element that is adhered to at least one of the rim portion and the spoke portion. The padding element comprises a molded substrate and a skin. The molded substrate defines an external surface having an inherent tackiness sufficient to adhere the skin to the molded substrate.

### Brief Description of the Drawings

Further features of the present invention will become apparent to those skilled in the art to which the present invention relates from reading the following description of the invention with reference to the accompanying drawings, in which:
Fig. 1 is schematic view of a portion of a padding element in accordance with the present invention;
Fig. 2 is a schematic view of a steering wheel in accordance with the present invention;
Fig. 3 is a cross-sectional view of the rim portion of the steering wheel of Fig. 2;
Fig. 4 is a schematic view of an injection molding apparatus in accordance with the present invention;
Fig. 5 is an enlarged schematic sectional view of the mold of Fig. 4; and
Fig. 6 is a cross-sectional of the rim portion of the steering wheel of Fig. 2 in accordance with an alternate embodiment.

### Description of the Preferred Embodiment

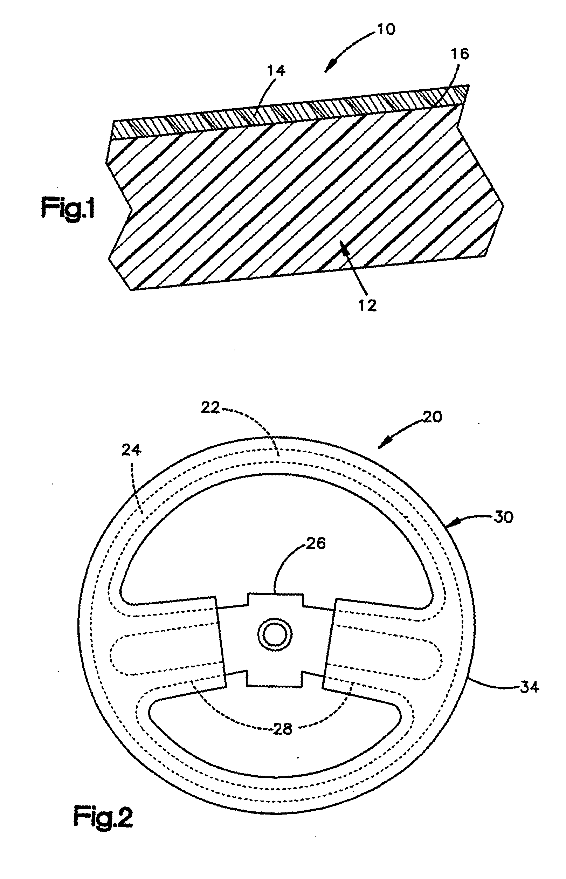

The present invention relates to a padding element for an interior component of a motor vehicle. Referring to Fig. 1, the padding element 10 comprises a molded substrate 12 and a skin 14. The skin 14 is attached to an external surface 16 of the molded substrate 12. The external surface 16 of the molded substrate 12 has an inherent tackiness. By "tackiness", it is meant that the external surface 16 of the molded substrate 12 has the property of adhering or holding by adhesion that enables the external surface 16 to form a bond of measurable strength with the skin after the external surface is brought into contact with the skin. By "inherent", it is meant that the tackiness is an intrinsic characteristic of the external surface 16 of the molded substrate 12 and not provided by an adhesive that has been added to or is separate from the external surface 16 of the molded substrate 12. The inherent tackiness of the molded substrate 12 is sufficient to secure the skin 14 to the external surface 16 of the molded substrate 12 without the use of an adhesive at the interface between the skin 14 and the external surface 16.

The skin that is attached to the molded substrate can be either a natural leather, such as a top grain leather and split grain leather, or a synthetic leather. By "synthetic leather", it is meant a material that is formed from a synthetic fabric, which simulates the appearance and feel of natural leather.

Examples of synthetic leathers that can be used in accordance with the present invention are polymer-coated woven fabrics and polymer-coated non-woven fabrics. Polymer-coated woven fabrics are typically manufactured by drying a cast polymer solution, such as a cast polyurethane solution, to form a film and laminating the film on a woven or knit fabric. The woven or knit fabric can be formed from natural polymers, such as cotton, or from synthetic polymers, such as rayon, nylon, acrylics, and polyesters. Polymer-coated non-woven fabrics are typically manufactured by impregnating a non-woven fabric with a polymer, such as polyurethane. The non-woven fabric can be formed from natural polymers, such as cotton, or from synthetic polymers, such as rayon, nylon, acrylics, and polyesters. Other types of synthetic leathers that have the appearance and feel of natural leathers can also be used.

The molded substrate can be formed from any resin that upon molding has an external surface with an inherent tackiness sufficient to have the skin adhere to the external surface. The resin can comprise a thermoplastic or thermosetting material. Preferably, the molded substrate is formed from a thermoplastic material. Thermoplastic materials are preferred to thermosetting materials because thermoplastic materials have a reduced molding cycle time and are recyclable from scrap.

Preferred thermoplastic materials include injection molded grade and extrusion grade thermoplastic materials that upon molding have an external surface with an inherent tackiness sufficient to adhere the skin. These thermoplastic materials can be based on well known thermoplastic polymers, such as polyethylene, polypropylene, polybutylene, polyisobutylene, polystyrene, copolymers of polyethylene, polypropylene, polybutylene, and polystyrene, and mixtures of two or more of these polymers or copolymers.

The thermoplastic polymer can be an elastomer, such as styrene-ethylene-butylene-styrene (SEBS), styrene-butadiene-styrene (SBS), ethylene-propylene-diene-monomer (EPDM), and blends thereof, or a non-elastomer. The thermoplastic polymer can also be modified by crosslinking or vulcanization to form a rubber.

Optionally, the thermoplastic polymer can be mixed with another thermoplastic material, thermoplastic elastomer, or rubber. For example, polypropylene can be mixed with an elastomer, such as styrene-ethylene-butylene-styrene (SEBS), styrene-butadiene-styrene, and blends of styrene-ethylene-butylene-styrene (SEBS) and styrene-butadiene-styrene (SBS), to produce rubber-modified polypropylene.

Preferably, the thermoplastic material has a durometer shore A hardness between about 30 and about 60. Thermoplastic materials with a durometer shore A hardness less than about 30 are desirably soft to the touch but are poor in terms of processing, moldability, and mechanical strength and, therefore, are unsatisfactory. Thermoplastic materials with a durometer shore A hardness greater than about 60 present no problems of processing or molding but are undesirably hard. Generally, it is preferable to use a thermoplastic material with a durometer shore A hardness between about 40 and about 55.

The external surface of the molded substrate can include micro-sized stippling, striations, graining, and/or ribbing to provide the external surface of the molded substrate with a rough feel. The rough external surface is preferred when a thermoplastic resin with a durometer shore A hardness between about 50 and about 60 is used to form the molded substrate..The rough surface enhances the grip of the skin to the molded substrate.

An example of a thermoplastic material that can be used to form the molded substrate with the inherent tackiness is commercially available from Kraiburg TPE GmbH., of Waldkraiburg, Germany, under the tradename THERMOLAST K TC 4AAZ. The exact details of the chemical composition of THERMOLAST K TC 4AAZ are not known. It is known, however, that THERMOLAST K TC 4AAZ is a thermoplastic elastomer based on styrene-ethylene-butylene-styrene (SEBS) hydrogenated block copolymers. THERMOLAST K TC 4AAZ has a low temperature toughness, a durometer shore A hardness of about 45 (measured in accordance with DIN 53505), a density of about 1.18 g/cm³ (DIN 53479), a tensile strength of about 5.0 N/mm² (DIN 53504), an elongation at break of about 800% (DIN 53504), a tear resistance of 12 N/mm (DIN 53515), chemical resistance, ozone and UV resistance, and a service temperature range between about -55°C and 120°C.

An example of another thermoplastic material that can be used to form the molded substrate with the inherent tackiness is commercially available from Kraiburg TPE GmbH., of Waldkraiburg, Germany, under the tradename THERMOLAST K TC 5STZ. The exact details of the chemical composition of THERMOLAST K TC 5STZ are not known. It is known, however, that THERMOLAST K TC 5STZ is a thermoplastic elastomer based on styrene-ethylene-butylene-styrene (SEBS) hydrogenated block copolymers. THERMOLAST K TC 5STZ has a low temperature toughness, a durometer shore A hardness of about 50 (measured in accordance with DIN 53505), a density of about 1.18 g/cm³ (DIN 53479), a tensile strength of about 5.0 N/mm² (DIN 53504), an elongation at break of about 600% (DIN 53504), a tear resistance of 12 N/mm (DIN 53515), chemical resistance, ozone and UV resistance, and a service temperature range between about -55°C and 120°C.

An example of yet another thermoplastic material that can be used to form the molded substrate with the inherent tackiness is a rubber modified thermoplastic polyolefin based on a ethylene-propylene-diene monomer (EPDM) that is commercially available from Bassell Polyolefins of Hoofddorp, Netherlands. The Bassell EPDM based thermoplastic polyolefin has a durometer shore A hardness between about 45 and about 50.

Optionally, the resin of the present invention can be combined with a blowing agent to foam the resin and produce a foamed molded substrate with a cellular structure. An example of one type of blowing agent that can be combined with the resin to produce a foamed molded substrate is a chemical foaming agent. A chemical foaming agent is a foaming agent that upon exposure to an elevated temperature undergoes a chemical reaction and produces a gas.

The chemical foaming agent.can be an endothermic chemical foaming agent, an exothermic chemical foaming agent, or a mixture of an endothermic chemical foaming agent and an exothermic chemical foaming agent. By "endothermic chemical foaming agent", it is meant a chemical foaming agent that reacts endothermically to produce a gas. By "exothermic chemical foaming agent", it is meant a chemical foaming agent that reacts exothermically to produce a gas.

The endothermic chemical foaming agent preferably comprises a carbonate and an organic acid that reacts chemically with the carbonate to form carbon dioxide. The carbonate of the endothermic chemical foaming agent can be a natural carbonate, such as calcium carbonate, sodium bicarbonate, and lithium carbonate. Alternatively, the carbonate of the endothermic chemical foaming agent can be a synthetic carbonate, such as a hydrotalcite compound. An example of a hydrotalcite compound is DHT-4A, which is made by Kyowa Chemical Industry Co., Ltd., of Kagawa, Japan. Examples of other synthetic carbonates that can be used as the carbonate in the endothermic chemical foaming agent are dihydroxyaluminum sodium carbonates, dihydroxyaluminum calcium carbonates and the Halogard products made by Chattem Chemicals of Chattanooga, Tenn.

The organic acid of the endothermic chemical foaming agent is preferably either malic or citric acid. Both acids are solids at room temperature and will react readily with a carbonate to form carbon dioxide and water. Any other organic acid that will react with the carbonate to form carbon dioxide and water may be used, such as maleic acid, formic acid, glutaric acid, oxalic, succinic acid, fumaric acid, and pyruvic acid.

Exothermic chemical foaming agents that can be used in the present invention include azo compounds, such as azodicarbonamide and modifications or derivatives thereof that on decomposition yield nitrogen, carbon monoxide, and carbon dioxide, other compounds that yield nitrogen, such as p,p-oxybis benzene sulfonyl hydrazide, other hydrazides, or p-toluene sulfonyl semicarbazide, dihydroxydiazione, 5-phenyltriazole, and compounds that yield hydrogen gas, such as sodium borohydride or other hydrides.

While the chemical foaming agent can be formulated to include either one hundred percent of an endothermic chemical foaming agent or one hundred percent of an exothermic chemical foaming agent, the preferred chemical foaming agent includes a blend of an exothermic chemical foaming agent and an endothermic chemical foaming agent. A blend is preferred even though the exothermic chemical foaming agent is more efficient and provides greater expansion than does an equal quantity of the endothermic chemical foaming agent because excessive quantities of exothermic chemical foaming agent prolong the duration of the foaming process and make the foaming process difficult to control.

The amount of chemical foaming agent used to form the foamed molded substrate is preferably about 0.1% to about 10% by weight of the resin. More preferably, the amount of chemical foaming agent used to form the foamed molded substrate is about 0.1% to about 4% by weight of the resin.

The chemical foaming agent can be compounded and encapsulated in a resin carrier so that the encapsulated chemical foaming agent may be blended uniformly with the resin used to form the molded substrate and passed through a barrel of an injection molding machine for production of a consistent foamed molded substrate. The resin carrier employed to encapsulate the chemical foaming agent is preferably a high-temperature thermoplastic material or a high-temperature thermoplastic elastomer. Preferably, the resin carrier is essentially the same material as the resin that is to be foamed. For example, if a styrene-ethyle-butylene-styrene thermoplastic elastomer is selected as the resin that will be foamed with the encapsulated chemical foaming agents, then styrene-ethyle-butylene-styrene thermoplastic elastomer is used as the resin carrier.

A preferred encapsulated chemical foaming agent that can be used is a mixture of CEL-SPAN 225 and CEL-SPAN 840. CEL-SPAN 225 is an exothermic chemical foaming agent commercially available from Phoenix Plastics Co., Inc. of Conroe, TX. CEL-SPAN 840 is an endothermic chemical foaming agent commercially available from Phoenix Plastics Co., Inc. of Conroe, TX. Both CEL-SPAN 225 and CEL-SPAN 840 are available in the form of granules that are encapsulated with a resin carrier. The weight percentage of CEL-SPAN 225 combined with the resin is about 0.2% to about 0.5% by weight of the resin. The weight percentage of CEL-SPAN 840 combined with the resin is about 0.1% to about 0.4% by weight of the resin.

The resin carrier used to encapsulate the particles of CEL-SPAN 840 and CEL-SPAN 225 is a high-temperature thermoplastic material. Preferably, the resin carrier used to encapsulate the particles of CEL-SPAN 840 and CEL-SPAN 225 is the same material as the resin used to form the molded substrate.

Alternatively, the blowing agent of the present invention can include other blowing agents well known in the art, such as expandable microspheres. An expandable microsphere comprises a hollow sphere of a thermoplastic material that contains a liquefied hydrocarbon. The liquefied hydrocarbon, when heated, gasifies and expands the expandable microsphere. A preferred expandable microsphere comprises a hollow sphere of a copolymer based on polyacrilonitrile. The hollow sphere has an unexpanded diameter of about 30 to about 40 microns and contains liquefied isoprene or isopentane. When heated, the isoprene or isopentane gasifies and expands the microsphere to a diameter of about 120 microns to about 140 microns. Microspheres of this type are commercially available from Akzo-Nobel Chemicals of Amersfoort, Netherlands.

The weight percentage of microspheres combined with the resin and chemical foaming agent is 0 to about 10% by weight, based on the combined weight of the resin and the chemical foaming agent. More preferably, the weight percentage of microspheres combined with the resin and the chemical foaming agent is 0 to about 4% by weight of the resin and the chemical foaming agent.

Optionally, the molded substrate of the present invention can include known additives for molding thermoplastic and thermosetting resins. Examples of these known additives include colorants, inorganic fillers, such as carbon black and titanium oxide, nucleating agents, such as calcium carbonate and magnesium carbonate, and stabilizers, such as light stabilizers, UV absorbents, and flame retardants. These additives are employed in an amount conventionally used in the art.

Preferably, a plasticizer is not used to form the molded substrate of the present invention. Plasticizers, if used, can potentially bleed from the molded substrate during the service life of the padding element. The bled plasticizer can evaporate and leave undesirable deposits on a vehicle windshield that must be removed.

The molded substrate is preferably formed using an injection molding process. In the injection molding process, the resin, and other ingredients, if utilized, are fed into an injection molding apparatus. The injection molding apparatus includes an injection molding machine and a mold. The injection molding machine can be a heated, screw-fed injection molding machine or any other injection molding machine known in the art.

The resin and other ingredients, if utilized, are mixed and heated within the injection molding machine and then injected from the injection molding machine into a mold cavity of the mold. The injected heated resin and other ingredients, if utilized, flow into the mold cavity until the mold cavity is substantially filled. Once the resin and other ingredients, if utilized, fill the mold cavity, the resin and other ingredients are cooled to room temperature (i.e., about 25°C) to form the molded substrate.

An advantageous feature of the injection molding process is the speed at which the molded substrate can be produced. Cycle times for producing molded substrates typically range from about 30 to about 70 seconds depending on the size and complexity of the mold. Other molding processes well known in the art, such as extrusion molding and compression molding, can also be used to form the molded substrate.

The skin can be attached to the molded substrate by arranging the skin on the external surface of the molded substrate. One method of arranging the skin on the external surface of the molded substrate is to wrap the external surface of the molded substrate with the skin. Once the molded substrate has been wrapped with the skin, portions of the skin can be stitched together or stitched to the molded substrate to further secure the skin to the molded substrate. Other methods of arranging the skin on the molded substrate can also be used.

The padding element of the present invention can be used to form or at least partially form an interior component of a motor vehicle. It should be understood that the foregoing is merely an example of one interior component partially formed using the padding element of the present invention.

Fig. 2 illustrates a steering wheel 20 for steering a motor vehicle. The steering wheel 20 includes an armature 22 that comprises a rim portion 24, a hub portion 26, and spoke portions 28. The rim portion 24 is annular in configuration and encircles the hub portion 26. The spoke portions 28 connect the rim portion 24 to the hub portion 26. The hub portion 26 connects the steering wheel armature 22 to a steering column (not shown) of the motor vehicle.

The rim portion 24, the spoke portions 28, and the hub portion 26 are typically made of a metal, such as steel, magnesium, or aluminum. The structure, appearance, and dimensions of the steering wheel armature 22 can be varied without deviating from the scope of the present invention.

The steering wheel also includes a padding element 30. The padding element 30 substantially covers the rim portion 24 and spoke portions 28 of the steering wheel armature 22.

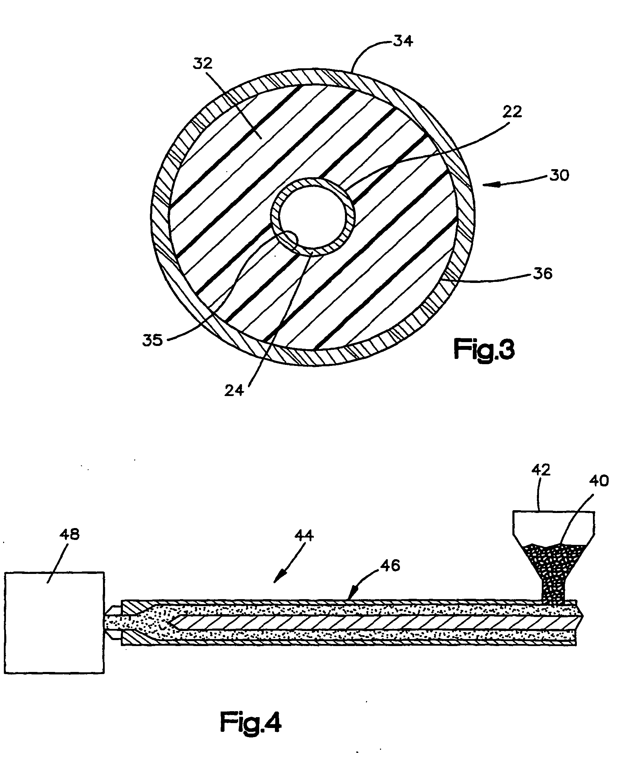

Referring to Fig. 3, which is a cross-sectional view of the padding element 30 covering the rim portion 24 of the steering wheel armature 22, the padding element 30 comprises a molded substrate 32 and a skin 34. The molded substrate 32 includes an inner surface 35 that is adhered to the steering wheel armature 22. The molded substrate also includes an external surface 36 to which the skin 34 is attached. The external surface 36 has an inherent tackiness sufficient to secure the skin 34 to the external surface 36 of the molded substrate 32.

The padding element 30 is preferably formed and adhered to the steering wheel 22 armature in an injection molding process as illustrated schematically in Fig. 4. Referring to Fig. 4, the resin 40 in accordance with the present invention is fed into a first hopper 42. Other ingredients, such as the chemical foaming agent, if utilized, can be fed into a second hopper (not shown) or fed into the first hopper 42. The resin 40 fed into the first hopper 42 is transferred to an injection molding apparatus 44. Alternatively, the resin 40 and other ingredients, if utilized, can be mixed together and fed into the first hopper, and then transferred to the injection molding apparatus 44.

The injection molding apparatus 44 includes an injection molding machine 46 and a mold 48. As shown in Fig. 4, the injection molding machine 46 can be a heated, screw-fed injection molding machine. Alternatively, the injection molding machine can be a ram-fed injection molding machine (not shown) or any other injection molding machine known in the art.

The resin 40, and other ingredients, if utilized, are mixed and can be heated within the injection molding machine 46. If the resin 40 is a thermoplastic material, the temperature to which the resin is heated is preferably a temperature effective to cause the resin to melt. The heated mixture is then injected from the injection molding machine 46 into the mold 48.

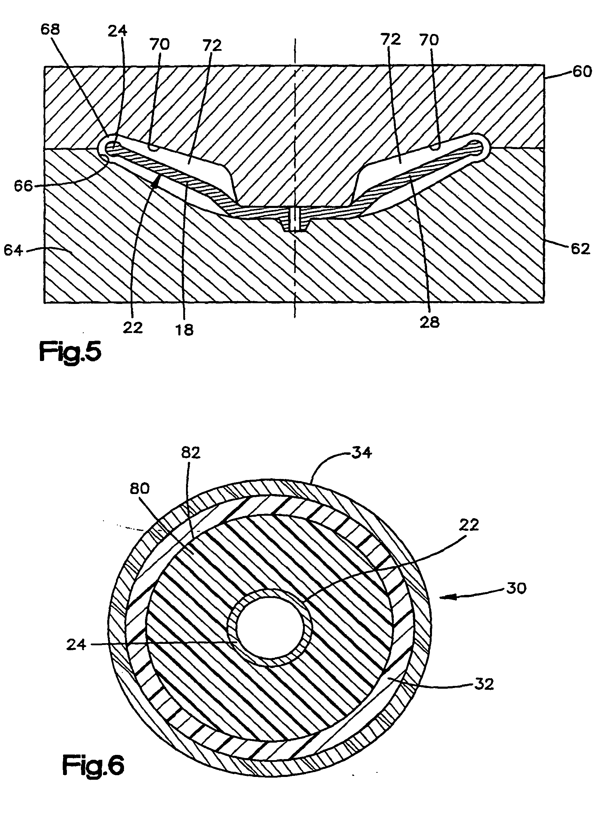

Referring to Fig. 5, which is a cross-sectional view of the mold 48, the mold 48 includes a first half 60 and a second half 62. The first half 60 and the second half 62 of the mold 44 together form a mold wall 64. The mold wall 64 includes a first wall portion 66 that defines an annular rim cavity 68 in which the rim portion 24 of the steering wheel armature 22 is received. The mold wall 64 also includes a second wall portion 70 that defines spoke cavities 72 in which the spoke portions 28 of the steering wheel armature 22 are received. The mold 48 further includes at least one sprue (i.e., gate) (not shown) that extends through the mold wall 64 for admitting the heated mixture from the injection molding machine 46 into the rim cavity 68 and the spoke cavities 72.

The heated mixture of resin 40 and other ingredients, if utilized, passes through the gate of the mold 48 and into rim cavity 68 and spoke cavities 72. The flow of the heated mixture continues until the rim cavity 68 and spoke cavities 72 are substantially filled and the heated mixture surrounds the rim portion 24 and spoke portions 28 of the steering wheel armature 22. The injection speed of the injection molding machine 46 is preferably controlled so that the rim cavity 68 and spoke cavities 72 are filled with the heated mixture in a period less than about 6 seconds. Preferably, the injection speed of the injection molding machine 46 is controlled so that the rim cavity 68 and spoke cavities 72 are filled in a period less than about 4.5 seconds.

Once the injected resin has cooled, the mold 48 is removed from the steering wheel 20. The skin 34 (Fig. 2) is then adhered to the molded substrate 32 on the rim 24 and spoke portion 28 of the steering wheel 20 by wrapping the rim 24 and spoke portion 28 of the steering wheel 20 with the skin. Portions of the skin can then be sutured (i.e., sewn to each other) to further secure the skin to the steering wheel.

Optionally, as shown in Fig. 6, the steering wheel can include a core material 80 that is disposed between and interconnects the padding element 30 and the steering wheel armature 22. The core material 80 substantially covers the rim portion 24 and spokes portions (not shown) of the steering wheel armature 22. The core material can be formed from any material that is used in the formation of interior components of motor vehicles. Preferred materials include thermoplastic and thermosetting materials that can be formed and adhered to the steering wheel armature by conventional molding techniques, such as injection molding and extrusion molding. Examples of these materials include polyurethane foams, polyvinyl chloride, polypropylene, polybutadiene, and thermoplastic elastomers, such as styrene-ethylene-butylene-styrene elastomers, styrene-butadiene-styrene elastomers, ethylene-propylene-diene-monomers, and blends thereof. Other materials well known in the art can also be selected.

The padding element 30 is attached to an external surface 82 of the core material 80. The padding element 30 can be attached to the core material 80 in an injection molding process similar to the injection molding process described above. The skin 34 of the padding element 30 can be adhered to the molded substrate 32 by wrapping the molded substrate on the rim portion and spoke portions of the steering wheel armature with the skin. Example

About 500 grams of a granular thermoplastic elastomer were added to a first hopper. The granular thermoplastic elastomer was commercially available from Kraiburg TPE GmbH., of Waldkraiburg, Germany, under the tradename THERMOLAST K TC 4AAZ. THERMOLAST K TC 4AAZ is a thermoplastic elastomer based on styrene-ethylene-butylene-styrene (SEBS) hydrogenated block copolymers with a durometer shore A hardness of about 45.

The granules of thermoplastic elastomer were transferred to a 650 ton press Cincinnati injection machine. The granules of thermoplastic elastomer were heated to a temperature above the melting temperature of the thermoplastic elastomer in the injection molding machine and then injected into a mold. The mold had a first mold portion that defined a rim cavity and a second mold portion that defined a spoke cavity. A rim portion of a steering wheel armature was seated in the rim cavity and a spoke portion of the steering wheel armature was seated in the spoke cavity.

The heated thermoplastic elastomer, after being injected into the mold, surrounded the rim portion and the spoke portions of the steering wheel armature. The injection speed at which the heated thermoplastic elastomer was injected into the rim cavity and the spoke cavity was such that the heated thermoplastic elastomer filled the rim cavity and the spoke cavity in about 2.5 seconds.

The thermoplastic elastomer was cooled in the mold until the temperature of the thermoplastic elastomer was below the melting temperature of the thermoplastic elastomer. The mold was removed from the molded substrate and the steering wheel armature. The molded substrate so formed surrounded the rim portion and spoke portion of the steering wheel armature and had an external surface with an inherent tackiness.

The molded substrate was then wrapped with leather so that the external surface of the molded substrate was completely covered with leather.

The padding element of the steering wheel so formed was subjected to a twist retention test that was performed in accordance with Ford test specification WSSM98P12A. In the twist retention test, the padding element was twisted to determine if the leather effectively adhered to the molded substrate. Upon twisting, the leather effectively adhered to the molded substrate, which indicated that the padding element conformed to Ford's twist retention requirements.

From the above description of then invention, those skilled in the art will perceive improvements, changes and modifications. Such improvements, changes, and modifications within the skill of the art are intended to be covered by the appended claims.

## Claims

1. A padding element for an interior component of a motor vehicle, said padding element comprising a molded substrate and a skin, said molded substrate defining an external surface having an inherent tackiness sufficient to adhere said skin to said molded substrate.

2. The padding element of claim 1 wherein said molded substrate and said skin are free of an adhesive.

3. The padding element of claim 1, wherein the molded substrate is formed from a thermoplastic material.

4. The padding element of claim 3, wherein the thermoplastic material is a thermoplastic elastomer with a durometer shore A hardness between about 30 and about 60.

5. The padding element of claim 1, wherein the molded substrate comprises a thermoplastic material selected from the group consisting of styrene-ethylene-butylene-styrene elastomers, styrene-butadiene-styrene elastomers, ethylene-propylene-diene-monomers, and blends thereof.

6. The padding element of claim 1 wherein the molded substrate is foamed and includes a cellular structure.

7. The padding element of claim 1 wherein the skin is selected from the group consisting of top grain leather, split grain leather, and synthetic leather.

8. A method of forming a padding element for an interior component of a motor vehicle, said method comprising the steps:
providing a molded substrate and a skin, said molded substrate including an external surface having an inherent tackiness sufficient to adhere said skin to said molded substrate, and
attaching said skin to said molded substrate.

9. The method of claim 8 wherein said skin is attached to said molded substrate by wrapping said molded substrate with said skin.

10. The method of claim 8 wherein said padding element is free of an adhesive at the interface between said molded substrate and said skin.

11. A steering wheel comprising a rim portion, a spoke portion, and a padding element adhered to at least one of said rim portion and said spoke portion, said padding element comprising a molded substrate and a skin, said molded substrate defining an external surface having an inherent tackiness sufficient to adhere said skin to said molded substrate.

12. The steering wheel of claim 11 wherein said molded substrate and said skin are free of an adhesive.

13. The steering wheel of claim 12, wherein the molded substrate is formed from a thermoplastic material.

14. The steering wheel of claim 13, wherein the thermoplastic material is a thermoplastic elastomer with a durometer shore A hardness between about 30 and about 60.

15. The steering wheel of claim 11, wherein the molded substrate comprises a thermoplastic material selected from the group consisting of styrene-ethylene-butylene-styrene elastomers, styrene-butadiene-styrene elastomers, ethylene-propylene-diene-monomers, and blends thereof.

16. The steering wheel of claim 11 wherein the molded substrate is foamed and includes a cellular structure.

17. The steering wheel of claim 11 wherein the skin is selected from the group consisting of top grain leather, split grain leather, and synthetic leather.
